# EUROPÄISCHE PATENTSCHRIFT

(11) **EP 4 441 568 B1**
(45) Veröffentlichungstag und Bekanntmachung des Hinweises auf die Patenterteilung: **12.08.2026**
(21) Anmeldenummer: 22797061.3
(22) Anmeldetag: 28.09.2022
(51) Int. Cl.: G05B 19/042, G05B 19/418, G06Q 50/04

(54) **VERFAHREN ZUM ÜBERWACHEN EINES PRODUKTIONSPROZESSES IN ECHTZEIT MITTELS EINER MASCHINEN-LERN-KOMPONENTE**
METHOD FOR MONITORING A PRODUCTION PROCESS IN REAL TIME BY MEANS OF A MACHINE-LEARNING COMPONENT
PROCÉDÉ DE SURVEILLANCE EN TEMPS RÉEL D'UN PROCESSUS DE PRODUCTION AU MOYEN D'UN COMPOSANT D'APPRENTISSAGE AUTOMATIQUE

(30) Priorität: 30.11.2021 DE 102021213513
(43) Veröffentlichungstag der Anmeldung: 09.10.2024
(73) Patentinhaber: Fraunhofer-Gesellschaft zur Förderung der angewandten Forschung e.V., 80686 München (DE)
(72) Erfinder: KÜHNERT, Christian, 76131 Karlsruhe (DE); ZIEBARTH, Mathias, 76131 Karlsruhe (DE); POIGNÉ, Axel, 53757 Sankt Augustin (DE)
(74) Vertreter: Pfenning, Meinig & Partner mbB
(86) Internationale Anmeldenummer: PCT/EP2022/076953
(87) Internationale Veröffentlichungsnummer: WO 2023/099059

(56) Entgegenhaltungen:
- WO-A1-2021/157676
- DE-A1- 102016 101 200

## Beschreibung

Die Offenbarung betrifft ein Verfahren zum Überwachen eines Produktionsprozesses in Echtzeit, mit einem Erfassen eines Datenwerts durch zumindest eine erste Komponente des Produktionsprozesses, einem Übermitteln des Datenwerts an eine zweite Komponente des Produktionsprozesses durch die erste Komponente, einem Zwischenverarbeiten des Datenwertes durch die zweite Komponente, und einem Bereitstellen des zwischenverarbeiteten Datenwertes an eine Maschinen-Lern-Komponente, ML-Komponente für ein Überwachen des Produktionsprozesses durch die ML-Komponente, durch die zweite Komponente.

Zum Lösen komplexer Datenverarbeitungsaufgaben, wie sie beim Überwachen moderner Produktionsprozesse auftreten, ist es sinnvoll, die Aufgabe in einfache Teilaufgaben zu zerlegen, welche dann durch spezialisierte Komponenten, welche in Hardware oder auch in Software implementiert werden können, gelöst werden. Diese Komponenten können dann unabhängig voneinander entwickelt und getestet werden. Die einzelnen Komponenten werden anschließend zur Lösung der Gesamtaufgabe zu einer sogenannten Datenverarbeitungspipeline zusammengesetzt. Entsprechende Datenwerte werden dabei in Form von Nachrichten in Echtzeit, also unmittelbar nach dem Zeitpunkt ihrer Verarbeitung, ohne vermeidbare Verzögerung weitergesendet, was auch als Streaming bezeichnet wird. Ein derartiges Streaming ist für das Überwachen in Echtzeit erforderlich. Entsprechend werden diese Begriffe hier synonym genutzt, ist von einem Übermitteln, Verarbeiten, oder Bereitstellen "in Echtzeit" die Rede, so ist hierunter also ein Übermitteln, Zwischenverarbeiten, oder Bereitstellen zu verstehen, welches in diesem Sinne unverzögert stattfindet. Aufgrund des möglicherweise erheblichen Rechenaufwandes für die verschiedenen Schritte kann es dabei zu Verzögerungen ("lags") kommen, welche jedoch an sich unerwünscht sind. Daher wird trotz dieser eventuell auftretenden Verzögerungen das entsprechende Verarbeiten als "in Echtzeit" bezeichnet.

Eine Datenverarbeitungspipeline besteht mindestens aus einer Quelle für einen oder mehrere Datenwerte. Die Quelle kann beispielsweise durch eine erste Komponente mit einem entsprechenden Sensorelement oder Aktuatorelement gebildet werden. Erfolgt der Prozess, beispielsweise bei einem Trainieren der ML-Komponente, nicht in Echtzeit, kann eine derartige Quelle auch ein Datenbankelement sein oder umfassen. Des Weiteren weist eine Datenverarbeitungspipeline beliebig viele Filter für die Datenwerte auf, beispielsweise eine oder mehrere zweite Komponenten, welche eine Vorverarbeitung von Daten vornehmen, sowie eine oder mehrere ML-Komponenten, welche eine jeweilige Klassifikation durch maschinengelernte Modelle vornehmen, bevorzugt gefolgt von einer oder mehreren Nachverarbeitungskomponenten, welche ein oder mehrere Klassifikationsergebnisse nachbearbeiten um eine Interpretierbarkeit durch einen Nutzer zu erleichtern, sowie mindestens eine sogenannte Senke, beispielsweise ein Dashboard zur Ergebnisdarstellung oder eine Datenbank zum Speichern der Ergebnisse. Durch die Nachverarbeitungskomponente kann beispielsweise Klassifikationsergebnissen, welche in Form von Zahlenwerten vorliegen, zum verbesserten Interpretieren des Klassifikationsergebnisses ein jeweiliger Text, beispielsweise ein Klassenname, zugeordnet werden. Eine notwendige Voraussetzung für eine funktionierende Datenverarbeitungspipeline ist, dass zwischen den jeweiligen Komponenten ein gemeinsames Datenaustauschformat eingehalten wird. Das gemeinsame Datenaustauschformat stellt eine syntaktische Korrektheit der Datenverarbeitung, also kompatible Datentypen sicher.

Allerdings ist ein gemeinsames Datenaustauschformat nicht hinreichend für eine fehlerfreie Kommunikation zwischen den Komponenten. Zusätzlich zur syntaktischen Übereinstimmung müssen die Daten auch gleich interpretiert werden, also semantisch übereinstimmen. Beispielsweise können für einen Temperaturmesswert, der als Fließkommazahl übertragen wird, unterschiedliche Einheiten, Messunsicherheiten und Abtastintervalle angenommen werden. Jedem übertragenem Datenwert liegt somit ein Informationsmodell zu Grunde, welches relevante Kontextinformation für die korrekte Interpretation des jeweiligen Datenwertes liefert. Zudem können sich einzelne Komponenten im Lauf der Zeit zum Beispiel durch eine Fehlerbehebung oder Funktionserweiterung ändern. Diese Weiterentwicklung kann eine Anpassung des Datenaustauschformats oder der Semantik der Daten zur Folge haben, wodurch sich auch die Bedeutung des zugehörigen Datenwerts ändert. Werden in der Datenverarbeitungspipeline die angrenzenden oder nachfolgenden Komponenten nicht an diese Änderungen angepasst, kann es zu Fehlern in der Pipeline kommen. Während ein Unterschied im Datenaustauschformat in der Regel zu erkennbaren Fehlern und Abstürzen in den angrenzenden Komponenten führt, kann eine Änderung in der Semantik der Daten unerkannt bleiben und in der Folge unerkannt zu einem falschen Ergebnis führen, und somit zu einem fehlerhaften Überwachen des Produktionsprozesses. Das Überwachen kann dabei ein aktives Überwachen, bei welchem die ML-Komponente mittels eines Steuersignals selbst in den Produktionsprozess eingreifen kann, und/oder ein passives Überwachen, bei welchem die ML-Komponente ein Warn- oder Hinweissignal ausgeben kann, aber nicht selbst in den Produktionsprozess eingreifen kann, umfassen oder sein. Beispiele für ein passives Überwachen sind prädiktive Wartung oder Qualitätsvorhersagen, wie beispielsweise eine Vorhersage einer Bauteilqualität.

Aktuell werden zum Überwachen von Produktionsprozessen eingesetzte Machine Learning Pipelines, also Datenverarbeitungspipelines, welche einen maschinengelernten Überwachungsprozess realisieren, Nachrichten zwischen Komponenten ausgetauscht, die lediglich einen Zeitstempel und Messwerte enthalten, die sogenannten Datenwerte. Nachrichten werden entsprechend aktuell nicht mit Meta-Informationen, d.h. Kontextinformation annotiert und die Beschreibung der ausgetauschten Daten geschieht implizit, d.h. dadurch, dass der oder die Entwickler bei dem Auslegen und/oder Programmieren von einer vorgegebenen Semantik ausgeht ohne diese explizit in den Komponenten zu hinterlegen. Semantische Änderungen in den Daten, beispielsweise durch eine modifizierte Komponente, bleiben hierdurch unerkannt und können in der Folge zu instabilen Pipelines oder zu Pipelines mit fehlerhaften Ergebnissen führen. Dies ist gerade bei maschinengelernten Überwachungsprozessen kritisch, da diese in der Anwendung sehr empfindlich auf derartige Fehler reagieren können, also beim Überwachen als "Blackbox" funktionieren und Nutzer somit gewohnt sind, Resultate nicht unbedingt nachvollziehen zu können, und somit als eventuell auftretendes fehlerhaftes Verhalten erst verhältnismäßig spät bemerken.

Es wird somit aktuell bei Datenverarbeitungspipelines darauf vertraut, dass die ausgetauschten Daten der miteinander verbundenen Komponenten zueinander kompatibel sind. Kommt es zu Änderungen der ausgetauschten Datenformate oder einer semantischen Änderung der ausgetauschten Daten, beispielsweise durch Änderungen an einer Datenquelle oder einer Komponente innerhalb der Pipeline, wird die Änderung durch die Entwickler aller beteiligten Komponenten der Datenverarbeitungspipeline nachgezogen. Eine Benachrichtigung an die involvierten Bedienpersonen, beispielsweise per Mail darf dabei nicht vergessen werden. Zur Anpassung der Komponenten wird die Datenverarbeitungspipeline, d.h. das Überwachen des Produktionsprozesses, dann zunächst gestoppt, neu konfiguriert, geladen, getestet und letztendlich wieder in Betrieb genommen. Beispielsweise kann so ein dynamischer Austausch einer Komponente zur Laufzeit des Produktionsprozesses nicht stattfinden. Hauptgrund ist, dass ein solcher Ersatz ein großes Risiko birgt, zu einer instabilen oder fehlerhaften Datenverarbeitungspipelines und damit zu einer fehlerhaften oder instabilen Überwachung des Produktionsprozesses zu führen.

Im Stand der Technik ist beispielsweise in WO 2021/157676 A1 eine Diagnosevorrichtung bekannt, die in einer Speichereinheit ein Modell zur Diagnose des Zustands einer Industriemaschine speichert und Daten erfasst, die mit dem Zustand der Industriemaschine verbunden sind, und auf der Grundlage der erfassten Daten den Zustand der Industriemaschine unter Verwendung des in der Speichereinheit gespeicherten Modells bestimmt. Wenn dann auf der Grundlage der erfassten Daten und der mit dem ermittelten Zustand der Industriemaschine verbundenen Daten festgestellt wird, dass eine Komponente der Industriemaschine ausgetauscht wurde, wird das in der Speichereinheit gespeicherte Modell an eine Diagnose des Zustands der Industriemaschine nach dem Austausch der Komponente angepasst.

DE 10 2016 101200 A1 beschreibt eine Techniken zur Bestimmung vorrichtungsspezifischer Informationen wie z. B. Inbetriebnahmedaten, Standortinformationen, Bildern und anderen Daten, die beschreibend für eine Prozessvorrichtung sind, die in einer Anlage installiert ist, umfassen das Erhalten von vorrichtungsspezifischen Informationen auf einer lokalen Vorrichtung während der Inbetriebnahme der Prozessvorrichtung. Auf der Grundlage dieser Informationen bestimmt die lokale Vorrichtung die relative Reihenfolge der Prozessvorrichtung innerhalb eines Prozessablaufs und kann eine Prozesselementausrichtungskarte bestimmen, welche die Aktivierungsreihenfolge einer Vielzahl von Prozesselementen innerhalb des Ablaufs angibt. Ein Benutzer kann die Karte auf der lokalen Vorrichtung ändern. Die Karte wird zu einem Big-Data-Prozesssteuerungsnetzwerk zur Verwendung bei Discovery- und Lernanalysen übertragen. Die vorrichtungsspezifischen Informationen und/oder die Karte kann/können verwendet werden, um auf der lokalen Vorrichtung Darstellungen/Ansichten des Prozessablaufs zu erzeugen, die Echtzeit-Betriebsdaten umfassen können. Ein Benutzer kann diese Ansichten für mehr oder weniger Details vergrößern oder verkleinern.

Entsprechend stellt sich die Aufgabe, die Stabilität und Flexibilität in einem in Echtzeit erfolgenden Maschinen-Lern-basierten Überwachen eines Produktionsprozesses zu verbessern.

Diese Aufgabe wird durch den Gegenstand des unabhängigen Patentanspruchs gelöst. Vorteilhafte Ausführungsformen ergeben sich aus den abhängigen Patentansprüchen, der Beschreibung, und den Figuren.

Ein Aspekt betrifft ein Verfahren zum Überwachen eines Produktionsprozesses in Echtzeit, somit ein zum Überwachen des Produktionsprozesses in Echtzeit geeignetes Verfahren. Ein Verfahrensschritt ist hier ein Erfassen zumindest eines Datenwerts, durch zumindest eine erste Komponente des Produktionsprozesses, d.h. eine Komponente, welche am Produktionsprozess aktiv, wie beispielsweise mit einem Aktuatorelement und/oder passiv, wie beispielsweise mit einem Sensorelement beteiligt ist. Das Überwachen kann somit als ein Teil des Produktionsprozesses angesehen werden. Ein weiterer Verfahrensschritt ist ein Übermitteln des zumindest einen Datenwerts an zumindest eine zweite Komponente des Produktionsprozesses durch die erste Komponente. Dieses Übermitteln erfolgt bevorzugt in Echtzeit, d.h. unmittelbar nachdem seine Verarbeitung, hier das Erfassen, in der jeweiligen ersten Komponente abgeschlossen ist. Ein weiterer Verfahrensschritt ist ein Zwischenverarbeiten des übermittelten Datenwerts durch die zweite Komponente. Schließlich erfolgt ein Bereitstellen des zwischenverarbeiteten Datenwerts an eine Maschinen-Lern-Komponente, eine ML-Komponente, entweder um in einem Trainingsmodus der ML-Komponente die ML-Komponente zu trainieren, oder in einem Anwendungsmodus der ML-Komponente durch die ML-Komponente den Produktionsprozess anhand des zwischenverarbeiteten Datenwerts zu überwachen. Bevorzugt erfolgt das Bereitstellen hier wieder in Echtzeit, d.h. ohne Verzögerung unmittelbar nach Abschluss des Zwischenverarbeitens. Die ML-Komponente kann entsprechend ausgebildet sein, aus dem zwischenverarbeitetem Datenwert ein Überwachungsergebnis abzuleiten und auszugeben, insbesondere anzuzeigen. Auch ein Werte-Array oder sonstige Wertestrukturen können hier als Datenwert verstanden werden.

Teil des Verfahrens ist ebenfalls ein Überprüfen, durch die erste Komponente, ob die erste Komponente in dem Produktionsprozess erstmalig in Betrieb genommen wird, und, falls ja, ein Übermitteln einer für die erste Komponente spezifischen Kontextinformation und des Datenwertes an die zweite Komponente, insbesondere zusammen mit dem Datenwert, beispielsweise in Form einer kombinierten Nachricht. Das erstmalige In-Betrieb-Nehmen kann hier ein Hochfahren aus einem ausgeschalteten Zustand umfassen, also ein erstmaliges In-Betrieb-Nehmen nach einem Ab- bzw. Anschalten der Komponenten und/oder des Produktionsprozesses, alternativ oder ergänzen ein erstmaliges In-Betrieb-Nehmen nach einer Installation der ersten Komponente in dem Produktionsprozess, was beispielsweise mit dem Setzen eines Bits in der Komponente überwacht werden kann. Entsprechend erfolgt durch die zweite Komponente anhand der Kontextinformation, welche von der ersten Komponente übermittelt wurde, dann ein Überprüfen, ob die erste Komponente des Produktionsprozesses sich von einer vorherigen ersten Komponente des Produktionsprozesses, welche durch die erste Komponente, welche nunmehr die Kontextinformation übermittelt hat bzw. übermittelt, ersetzt wurde, unterscheidet, und, falls ja, Ausgeben eines Warnsignals und Unterbrechen des Zwischenverarbeitens des von besagter ersten Komponente übermittelten Datenwerts.

Es werden somit zusätzlich zu dem Datenwert, der typischerweise ein Messwert ist oder einen solchen umfasst oder auf einem solchen basiert, auch noch Meta-Informationen von einer Komponente in Form der für die jeweilige Komponente spezifischen Kontextinformationen übermittelt, beispielsweise als kombinierte Nachricht mit zwei Teilen, einem Datenwert-Teil und einem Kontext-Informations-Teil. Entsprechend enthält eine übermittelte Nachricht nicht mehr nur einen einzelnen Wert, den Datenwert, oder ein Array an Werten als Datenwert, sondern enthält zusätzlich noch Informationen wie beispielsweise Einheit und/oder Messunsicherheit und/oder Filterparameter und/oder verwendetes Maschinen-Lern-Modell und/oder Ähnliches, wie weiter unten noch ausführlicher beschrieben. Hinsichtlich des Datenwerts mit Kontextinformation, insbesondere der eingehenden kombinierten Nachricht, hat die empfangende Komponente die Möglichkeit, nicht nur auf diese spezifische Kontextinformation wie oben beschrieben mit einem Unterbrechen eines Verarbeitungsprozesses des Datenwerts in der jeweiligen Komponenten zu reagieren und so eine unentdeckte Fehlfunktion und unentdeckte fehlerhafte Berechnung zu vermeiden, sondern auch die Fehlfunktion zu löschen und/oder die Berechnung (ggf. auch automatisch) anzupassen, wie auch weiter unten noch beschrieben.

Entsprechend kann das von der zweiten Komponente ausgegebene Warnsignal auch eine dann für die zweite Komponente spezifische Kontextinformation sein oder umfassen, welche ihrerseits an eine nachfolgende Komponente, beispielsweise besagte Maschinen-Lern-Komponente übermittelt werden kann. Dies kann nicht nur ergänzend, sondern auch alternativ zum Unterbrechen des Zwischenverarbeitens erfolgen, so dass die zweite Komponente, sofern sich die erste Komponente unterscheidet, also eine neue erste Komponente im Produktionsprozess integriert wurde, das Zwischenverarbeiten fortsetzt, aber nun seinerseits eine spezifische Kontextinformation übermittelt, welche sich von einer zuvor übermittelten, für die zweite Komponente spezifischen Kontextinformation, welche zu einem Zeitpunkt, bei welchem noch die vorherige erste Komponente in dem Produktionsprozess in Betrieb war, unterscheidet, also die Änderung kenntlich macht. Die nachfolgende Komponente, hier die ML-Komponente, kann dann ihrerseits entscheiden, wie weiter vorgegangen werden soll, und möglicherweise ein Modifizieren, insbesondere ein automatisches Modifizieren des Zwischenverarbeitens in der zweiten Komponente veranlassen. Dies ist weiter unten auch noch für eine als Korrektur-Komponente bezeichnete Komponente beschrieben.

Schlussendlich kann somit eine Datenverarbeitungspipeline ermöglicht werden, welche sich selbst überwachen oder ggf. sogar auf semantische Änderungen in den Komponenten selbstständig in Form einer Anpassung an die semantische Änderung reagieren kann. Die Beschreibung der Metadaten erfolgt dabei in standardisierter Form, beispielsweise wie in JSON oder XML, sind somit bevorzugt gemäß einem einheitlichen Informationsmodell aufgebaut. Das Übermitteln der spezifischen Kontextinformationen bei einem Ändern der entsprechenden Komponente, also bei dem erstmaligen Betrieb-Nehmen der Komponente, sorgt dabei für eine effiziente Übertragung der Kontextinformationen. Alternativ oder ergänzend kann das Übermitteln der Kontextinformationen beim Starten der Datenverarbeitungspipeline erfolgen.

Es werden also die übermittelten Daten einer Komponente mit zusätzlichen semantischen Informationen, den Kontextinformationen, angereichert. Damit sind die Informationen, welche in herkömmlicher Weise in Form eines Handbuch oder Datenblatts für entsprechende erste Komponenten wie beispielsweise Sensorkomponenten oder Aktuatorkomponenten bereitgestellt werden, innerhalb der Produktionsvorrichtung, welche den Produktionsprozess und dessen Überwachung umsetzt, implementiert. Die Kontextdaten werden dabei in standardisierter Form, beispielsweise durch Key-Value-Paare beschrieben. Ein beispielhaftes Key-Value-Paar ist "Name" als Key und "Sensor1" als Value. Die zweite Komponente kann auch eine Datenbank umfassen, in welcher die Kontextinformationen samt einem eindeutigen Identifikator abgelegt werden können. Sind mehrere zweite Komponenten vorhanden, so können diese sich auch eine Datenbank teilen, was die Effizienz erhöhen kann.

Das hat den Vorteil, dass die Datenverarbeitungspipeline aktualisiert werden kann, ohne sie unnötig zu stoppen. Die einzelnen Komponenten können unabhängig voneinander ausgetauscht werden, ohne die Gesamtpipeline, welche eine komplexe Struktur mit vielen Gruppen von ersten Komponenten umfassen kann, wobei jede Gruppe der ersten Komponente jeweils einer zweiten Komponente zugeordnet ist, und auch die zweiten Komponenten mehrfach vorhanden sein und entsprechend Gruppen bilden können, welche wiederum einer jeweiligen Maschinen-Lern-Komponente zugeordnet sein kann, welche ebenfalls eine von vielen Maschinen-Lern-Komponenten sein kann. Es muss also für ein Austauschen einer Komponente nicht mehr auf ein Wartungsfenster in der Produktion gewartet werden. Auch sind die einzelnen Komponenten und somit die gesamte Datenverarbeitungspipeline besser vor Fehlfunktionen geschützt. Verändert sich beispielsweise die Quelle, also zum Beispiel eine erste Komponente durch ein Anpassen der Einheit für den Datenwert eines Sensorelements der ersten Komponente, erfährt dies die nachfolgende zweite Komponente und kann entsprechend darauf reagieren. Neben dem kontrollierten Herunterfahren der Pipeline, dem Unterbrechen des Zwischenverarbeitens, ist hier auch eine Meldung, beispielsweise an einen Entwickler oder Betreuer der Datenverarbeitungspipeline in Form der Warnung vorgesehen und eventuell auch ein dynamisches, bevorzugt automatisches, Anpassen der den Datenwert verarbeitenden Komponente an die jeweilige Veränderung. Entsprechend wird hier die Grundlage für generische gewählte Funktionalitäten einzelner Komponenten gelegt, da nachfolgende Komponenten durch die zur Verfügung gestellten Kontextinformationen besser auf die Daten der vorherigen Komponente reagieren können und so ggf. auch automatisch ihre Auswertalgorithmen anpassen können.

Durch die semantische Beschreibung der einzelnen Komponenten in die Kontextinformationen lässt sich auch ein einheitliches Informationsmodell der kompletten Datenverarbeitungspipeline erstellen. Dies gewährleistet die Rückverfolgbarkeit eines Datenflusses über die gesamte Datenverarbeitungspipeline für Nutzer des Produktionsprozesses bzw. der Überwachung des Produktionsprozesses. Auch Zwischenergebnisse innerhalb der Datenverarbeitungspipeline werden durch die Kontextinformationen interpretierbarer, wodurch der gesamte Überwachungsprozess, bzw. das Verfahren zum Überwachen des Produktionsprozesses sowohl für Nutzer als auch Entwickler verständlicher wird. Entwickler des Überwachungsprozesses haben zudem bei dem Programmieren der einzelnen Komponenten die Möglichkeit, asynchron und mit einem niedrigeren Kommunikationsbedarf mit anderen Entwicklern an der Komponente zu arbeiten. Schließlich können Ergebnisse der einzelnen Komponenten sowie der gesamten Datenverarbeitungspipeline automatisiert gegenüber ihrer Beschreibung getestet werden, was die Fehleranfälligkeit weiter verringert.

In einer vorteilhaften Ausführungsform ist vorgesehen, dass die erste Komponente zum Erzeugen des Datenwerts ein Sensorelement und/oder ein Aktuatorelement umfasst. Entsprechend kann die erste Komponente als Sensorkomponente, Aktuatorkomponente, oder kombinierte Sensor-Aktuator-Komponente bezeichnet werden. Insbesondere kann die jeweilige Komponente zusätzlich zu dem Sensor- und/oder Aktuatorelement ein Konvertierelement zum Konvertieren des von Sensorelement und/oder Aktuatorelement erzeugten Datenwerts in einen Datenwert einer vorgegebenen physikalischen Einheit umfassen. Beispielsweise kann so sichergestellt werden, dass eine Temperatur jeweils korrekt in Grad Celsius an die zweite Komponente übermittelt wird. Alternativ kann ein derartiges Konvertierelement auch Teil der zweiten Komponente sein, so dass ggf. ein Austauschen des Sensorelements allein als Austauschen der ersten Komponente im Sinne des beschriebenen Verfahrens verstanden werden kann. In diesem Beispiel umfasst das Zwischenverarbeiten der zweiten Komponente dann ein Umwandeln der Einheiten für den Datenwert. Es ist zu beachten, dass das Bereitstellen des zwischenverarbeiteten Datenwerts an die ML-Komponente auch als mittelbares Bereitstellen verstanden werden kann, d.h. ein Bereitstellen an eine zusätzliche Komponente, von der bekannt ist, dass sie ihrerseits die bereitgestellten zwischenverarbeiteten Datenwerte oder von diesen abgeleitete Datenwertean besagte ML-Komponente weiterleitet. Das Konvertierelement erhöht die Flexibilität und Verlässlichkeit der Überwachung und das Erzeugen des Datenwerts durch ein Sensor- bzw. Aktuatorelement ist für das Überwachen eines Produktionsprozesses besonders vorteilhaft.

In einer weiteren vorteilhaften Ausführungsform ist vorgesehen, dass Datenwerte durch mehrere unterschiedliche erste Komponenten erfasst und an die dann den mehreren unterschiedlichen ersten Komponenten zugeordnete zweite Komponente übermittelt werden. Die mehreren ersten Komponenten bilden dann eine erste Komponentengruppe, welche der zweiten Komponente zugeordnet ist. Entsprechend können Datenwerte auch durch eine Vielzahl unterschiedlicher erster Komponenten erfasst werden, welche unterschiedlichen Komponentengruppen zugehörig sind, wobei jeder der unterschiedlichen Komponentengruppen eine von mehreren zweiten Komponenten zugeordnet ist. Analog können auch mehrere ML-Komponenten vorgesehen sein, an welche jeweils von einer oder mehrerer der zweiten Komponenten Datenwerte bereitgestellt werden. Damit lassen sich auch komplexere Produktionsprozesse überwachen.

In einer anderen vorteilhaften Ausführungsform ist vorgesehen, dass die für jede Komponente spezifische Kontextinformation gemäß einem einheitlichen Informationsmodell aufgebaut ist, welches hierarchisch aufgebaut ist und für alle Komponenten identisch aufgebaute oder strukturierte Basisinformationen umfasst, d.h. beispielsweise für alle Komponenten identische Key-Felder der Key-Value Paare. Die jeweilige Komponente kann dabei die erste, alternativ oder ergänzend auch die zweite und/oder ML-Komponente bezeichnen. Die für die jeweilige Komponente spezifischen Kontextinformationen umfassen somit ein oder mehrere Feldnamen, den Inhalt der Key-Felder, sowie den jeweiligen Feldinhalt, den Inhalt der Value-Felder. Die für eine konkrete Komponente definierten Feldnamen werden zuvor in dem für die jeweilige Komponente typisierten Schema entsprechend dem einheitlichen Informationsmodell festgelegt. Die Schemata können dabei durch eine Vererbungsstruktur wie beispielsweise von Klassen-basierten Programmiersprachen bekannt festgelegt werden. Dabei enthalten jeweils speziellere Komponenten zusätzlich zu den gemeinsamen Basisinformationen weitere charakteristische Kontextinformationen. Eine erste Komponente, welche beispielsweise einen Temperaturwert als Datenwert überträgt, kann beispielsweise für den Feldnamen/Key "beobachtete Messgröße" mit dem Feldinhalt/Value "Lufttemperatur" aufweisen und beispielsweise für den Feldnamen/Key "physikalische Einheit" mit dem Feldinhalt/Key "Grad Celsius".

Entsprechend kann die Basisinformation als Feldname/Key einen Identifikator der Komponente und/oder einen Namen der Komponenten und/oder eine Beschreibung der Komponenten und/oder eine Parametrisierung für die von den Komponenten bereitgestellten Datenwerten umfassen.

Bevorzugt zusätzlich zu den Basisinformationen kann die für die jeweilige erste Komponente spezifische Kontextinformation als Feldname/Key eine physikalische Einheit des Datenwerts und/oder eine Ortsinformation der ersten Komponente und/oder ein Kodierschema für den Datenwert und/oder ein Datenblatt für die erste Komponente umfassen. Falls die erste Komponente ein Sensorelement umfasst, kann die spezifische Kontextinformation als Feldnamen/Key einen Namen der beobachteten Messgröße bzw. die beobachteten Messgröße und/oder eine Beschreibung für die beobachtete Messgröße umfassen. Falls die erste Komponente ein Aktuatorelement umfasst, kann der Feldname/Key einen Namen eines Aktuatorzwecks bzw. den Aktuatorzweck und/oder eine Beschreibung für den Aktuatorzweck umfassen.

Die für die jeweilige zweite Komponente spezifische Kontextinformation kann, bevorzugt zusätzlich zu den Basisinformationen, als Feldname/Key eine Merkmalsvektor-Spezifikation umfassen, und der oder die Datenwerte der zumindest einen der zweiten Komponente zugeordneten ersten Komponente an die ML-Komponente in Form eines entsprechenden Merkmalsvektors bereitgestellt werden.

Bezieht sich die spezifische Kontextinformation auf eine Maschinen-Lern-Komponente, so kann die, bevorzugt zusätzlich zu den Basisinformationen, als Feldname/Key eine Spezifikation des implementierten ML-Modells und/oder eine Spezifizierung einer Ergebniskodierung des ML-Modells und/oder andere Metadaten wie eine Parametrisierung umfassen.

In einer vorteilhaften Ausführungsform ist vorgesehen, dass die zweite Komponente aus von unterschiedlichen ersten Komponenten an sie übermittelte Kontextinformationen eine zusammengesetzte Kontextinformation generiert, wobei die zusammengesetzte Kontextinformation die Schnittmenge der übermittelten Kontextinformationen ist. Die zusammengesetzte Kontextinformation enthält somit entsprechend dem einheitlichen Informationsmodell nur die Feldnamen, welche den Kontextinformationen aller ersten Komponenten gemeinsam ist, es entspricht somit einem kleinsten gemeinsamen Nenner der Kontextinformationen der ersten Komponenten. Alternativ kann die zusammengesetzte Kontextinformation die Vereinigungsmenge der übermittelten Kontextinformationen sein, also sämtliche empfangene Kontextinformation beibehalten und als jeweils zu dem entsprechenden Datenwert gehörig abgespeichert werden. Die zusammengesetzte Kontextinformation enthält somit sämtliche verfügbare Kontextinformation, was jedoch die Komplexität sehr erhöhen kann. Eine derartige zweite Komponente kann auch als sogenannte Join-Komponente bezeichnet werden. Entsprechend kann das Beschriebene auch mutatis mutandis auch für ein Join-Element, welches die für die Join-Komponente beschriebene Funktion als Teil einer ersten Komponente für die für unterschiedliche Sensorelemente der ersten Komponente durchführt.

Analog zu dem Überprüfen durch die erste Komponente, ob die erste Komponente in den Produktionsprozess erstmalig in Betrieb genommen wird, kann auch durch die zweite Komponente überprüft werden, ob die zweite Komponente in dem Produktionsprozess erstmalig in Betrieb genommen wird, und falls ja, durch die zweite Komponente eine für die zweite Komponente spezifische Kontextinformation und der zwischenverarbeitete Datenwert an die Maschinen-Lern-Komponente bereitgestellt werden. Insbesondere kann die spezifische Kontextinformation zusammen mit dem zwischenverarbeiteten Datenwert in Form einer kombinierten Nachricht bereitgestellt werden. Die Maschinen-Lern-Komponente überprüft dann anhand der Kontextinformation, ob die zweite Komponente des Produktionsprozesses sich von einer vorherigen zweiten Komponente des Produktionsprozesses, welche durch die zweite Komponente, welche die Kontextinformation bereitgestellt hat, ersetzt wurde, unterscheidet, und falls ja, ein Warnsignal ausgibt und Überwachen unterbricht. Hiermit werden die oben beschriebenen Vorteile analog auf der nächsthöheren Verarbeitungsebene des Überwachungsprozesses erreicht.

In einer besonders vorteilhaften Ausführungsform ist vorgesehen, dass das Ausgeben des jeweiligen Warnsignals an eine Korrektur-Komponente erfolgt, und auch die Kontextinformation der Komponente, welche das Warnsignal ausgibt, sowie die Kontextinformation der Komponente, welche sich von der vorherigen im Produktionsprozess eingesetzten Komponente unterscheidet, an die Korrektur-Komponente ausgegeben werden, bevorzugt das Warnsignal zusammen mit den Kontextinformationen in einer zusammengesetzten gemeinsamen Nachricht. Dabei modifiziert die Korrektur-Komponente anhand hinterlegter Vorschriften basierend auf den ausgegebenen Kontextinformationen eine für das Zwischenverarbeiten und/oder eine für das Trainieren bzw. Überwachen hinterlegte Rechenvorschrift in der das Warnsignal ausgebenden Komponente. Dieses Modifizieren kann auch automatisch erfolgen. Nach dem Modifizieren nimmt die Komponente, welche das Warnsignal ausgegeben hat, das Zwischenverarbeiten und/oder das Trainieren bzw. Überwachen automatisch wieder auf. Damit wird die bereits weiter oben erläuterte fehler-tolerante, und zumindest in der hinterlegten Vorschrift definierte Fehler selbständig korrigierende Datenverarbeitungspipeline realisiert, was zu einem verbesserten Überwachen des Produktionsprozesses führt.

Ein weiterer Aspekt bezieht sich auf eine zum Durchführen des beschriebenen Verfahrens geeignete Vorrichtung. Vorteile und vorteilhafte Ausführungsformen der Vorrichtung entsprechen dabei Vorteilen und vorteilhaften Ausführungsformen des Verfahrens.

Die vorstehend in der Beschreibung, auch im einleitenden Teil, genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus

Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Anhand der in den nachfolgenden Figuren gezeigten schematischen Zeichnungen soll der erfindungsgemäße Gegenstand näher erläutert werden, ohne diesen auf die hier gezeigten spezifischen Ausführungsformen einschränken zu wollen. Dabei zeigen:
Fig. 1 ein erstes beispielhaftes Szenario mit mehreren ersten Komponenten; und
Fig. 2 ein zweites beispielhaftes Szenario mit mehreren ersten Komponenten.

In den unterschiedlichen Figuren werden dabei gleiche oder funktionsgleiche Elemente mit den gleichen Bezugszeichen versehen.

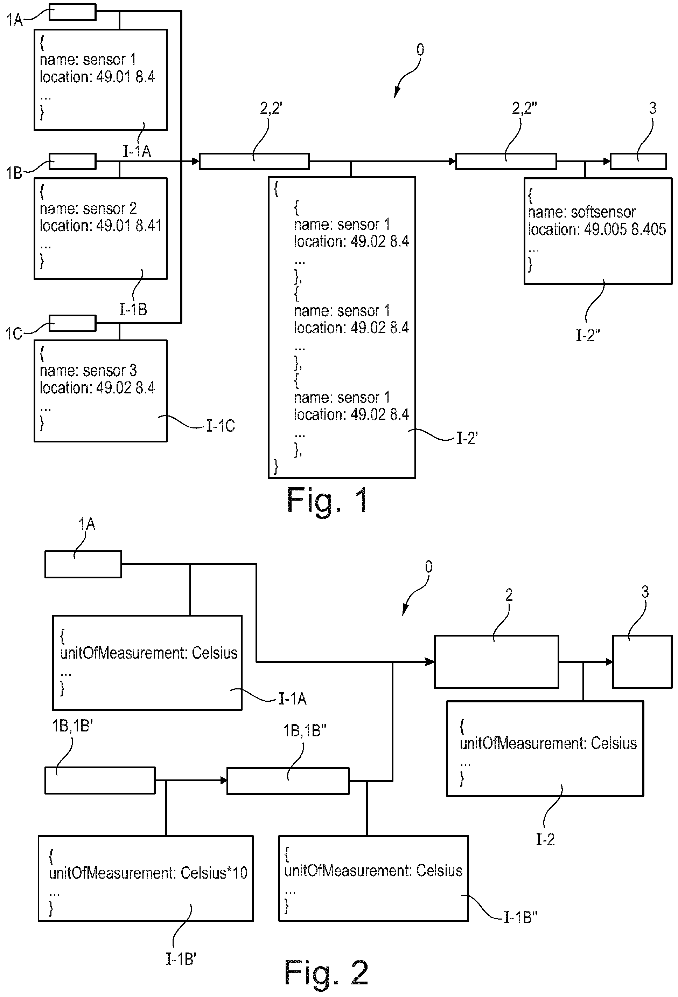

Fig. 1 zeigt ein erstes beispielhaftes Szenario, in welchem ein beispielhafter Produktionsprozess in Echtzeit überwacht wird. Es werden dort parallel mehrere Datenwerte durch zumindest eine, vorliegend drei erste Komponenten 1A, 1B, 1C erfasst. Zum Überwachen des Produktionsprozesses weisen die ersten Komponenten 1A, 1B, 1C hier jeweilige Sensorelemente auf und können entsprechend als Sensorkomponenten bezeichnet werden. Die Datenwerte werden an eine zweite Komponente 2, vorliegend eine Join-Komponente, übermittelt. Die Datenwerte der ersten Komponenten 1A, 1B, 1C werden bei der erstmaligen Inbetriebnahme der jeweiligen ersten Komponenten 1A, 1B, 1C, beispielhafterweise als gemeinsame Nachricht, mit jeweiligen zugehörigen spezifischen Kontextinformationen I-1A, I-1B, I-1C an die zweite Komponente 2 übermittelt. Entsprechend dem vorliegend hinterlegten oder genutzten Informationsmodell für die spezifische Kontextinformation I-1A, I-1B, I-1C enthalten die Kontextinformationen I-1A, I-1B, I-1C in diesem Beispiel einen Feldnamen/Keys "name" mit "sensor1", "sensor2" bzw. "sensor3" als beispielhaften Feldinhalt/Value sondern auch eine Ortsinformation der jeweiligen ersten Komponente, einen Feldnamen/Key "location" mit vorliegend "49.01 8.4", "49.01 8.41" bzw. "49.02 8.4" als beispielhaften Feldinhalt/Value.

Die Datenwerte der ersten Komponenten 1A, 1B, 1C sowie die spezifischen Kontextinformationen I-1A, I-1B, I-1C werden an die zweite Komponente 2 übermittelt. Ein erstes Element 2' der zweiten Komponente 2, ein Join-Element 2', generiert aus den Kontextinformationen I-1A, I-1B, I-1C vorliegend eine zusammengesetzte Kontextinformation I-2', welche vorliegend eine Vereinigungsmenge der einzelnen Kontextinformationen I-1A, I-1B, I-1C ist. Diese zusammengesetzte Kontextinformation I-2' kann nun mit dem entsprechenden Datenwerten an ein zweites Element 2"der zweiten Komponente 2 übermittelt werden, welches hieraus einen Wert, vorliegend einen Temperaturwert, berechnet. Beispielsweise kann durch ein Mittelungsverfahren die Temperatur an einem zwischen den Orten gelegenen vierten Ort berechnet werden. Entsprechend ist die der zweiten Komponente 2' zugeordnete Kontextinformation 1-2" nach dem zweiten Element modifiziert, hier mit einem anderen Wert für den Namen der Komponente und den Ort der Komponente versehen, in diesem Beispiel mit "softsensor" als Value für den Key "name" und "49.005 8.405" als Value für den Key "location". Die im zweiten Element 2" der zweiten Komponente 2 generierte zusammengesetzte Kontextinformation 1-2" ist somit eine Schnittmenge der Kontextinformation I-2'. Diese zusammengesetzte Kontextinformation 1-2" kann nun gemeinsam mit dem zugehörigen Datenwert an eine Maschinen-Lern-Komponente 3 bereitgestellt bzw. übermittelt werden.

Im gezeigten Beispiel überprüft jede der ersten Komponenten 1A, 1B, 1C, ob die jeweilige erste Komponente 1A, 1B, 1C in dem Produktionsprozess erstmalig in Betrieb genommen wird, und falls ja, übermittelt, ggf. zusammen mit entsprechenden erfassten Datenwerten, die jeweils zugehörige spezifische Kontextinformation I-1A, I-1B bzw. I-1C an die zweite Komponente 2. Die zweite Komponente 2 überprüft dann anhand der Kontextinformationen I-1A, I-1B, I-1C, ob die erste Komponente 1A, 1B bzw. 1C des Produktionsprozesses sich von einer vorherigen ersten Komponente, welche durch die erste Komponente 1A, 1B bzw. 1C ersetzt wurde, unterscheidet. Falls dies der Fall ist, erfolgt ein Ausgeben eines Warnsignals und ein Unterbrechen des Zwischenverarbeitens, hier des Fusionierens der Datenwerte im ersten Element 2' oder im zweiten Element 2".

Wird nun eine der ersten Komponenten 1A, 1B, 1C verändert, beispielsweise ersetzt, und an einem anderen Ort installiert, so kann dies in der zweiten Komponente 2 festgestellt werden und durch ein Unterbrechen des Verarbeitens in der Komponente 2 ein fehlerhaftes Betreiben der gezeigten Datenverarbeitungspipeline 0 verhindert werden, im vorliegenden Fall ein fehlerhaftes Mitteln der Temperatur für den vierten Ort verhindert werden.

Mit der Verwendung von hier nicht gezeigten Korrektur-Komponenten kann ggf., gerade wenn die bei einem Ersetzen der ersten Komponente zu erwartende Veränderung wie beispielsweise ein Ändern des Ortes einer der ersten Komponenten 1A, 1B, 1C vorhersehbar ist, die Komponente 2 bzw. 2' automatisch durch eine vorbestimmte in der Korrektur-Komponente hinterlegte Vorschrift rekonfiguriert und an die neue Situation, hier den neuen Ort einer der drei ersten Komponenten 1A, 1B, 1C angepasst werden, sodass die Temperatur für den vierten Ort korrekt berechnet wird.

In Fig. 2 ist eine weitere beispielhafte Ausführungsform einer Datenverarbeitungspipeline 0 für ein anderes Szenario gezeigt. Eine erste als Sensorkomponente ausgeführte Komponente 1A stellt hier als Thermokamera eine Temperaturmessung bereit, welche entsprechend der spezifischen Kontextinformation I-1A als Celsius-Datenwert bereitgestellt wird. Die spezifische Kontextinformation I-1A umfasst hier entsprechend für den Key "unitOfMeasurement" den Value "Celsius". Eine als weitere Sensorkomponente ausgeführte weitere erste Komponente 1B mit einem Thermoelement stellt hier in einem Sensorelement 1B' Datenwerte bereit, welche aus Effizienzgründen statt in Fließkommazahlen als angenäherter Ganzzahlwert dargestellt werden. Entsprechend muss zur Berechnung der Temperatur in Celsius dieser Wert mit einem Faktor geteilt werden, beispielsweise entspricht ein Datenwert von 215 tatsächlich einem Wert von 21,5°Celsius. Die erste Komponente 1A hingegen liefert den Datenwert direkt in Celsius. Mittels der zweiten Komponente 2 soll nun die mittlere Temperatur berechnet und an eine ML-Komponente 3 weitergegeben werden. Hierfür weist die weitere erste Komponente 1B ein Konvertierelement 1B" auf. In der Datenverarbeitungspipeline 0 vor dem Konvertierelement 1B" ist entsprechen in der Kontextinformation I-1B' für den Key "unitOfMeasurement" der Value "Celsius*10" hinterlegt, und in der Kontextinformation I-1B" nach dem konvertierelement 1B" für den Key "unitOfMeasurement" der Value "Celsius".

Durch die Kontextinformationen I-1A, I-1B, I-1B', I-2 kann die gesamte Datenverarbeitungspipeline 0 überwacht werden und es kann beispielsweise jederzeit überprüft werden, ob die bereitgestellten Datenwerte tatsächlich die gleiche Einheit besitzen und so sinnvoll ein Mittelwert berechnet werden kann. Dies ist vor allem wichtig, wenn die ersten Komponenten 1A, 1B ausgetauscht werden, und sich entsprechend möglicherweise die Natur der bereitgestellten Datenwerte ändert.

## Patentansprüche

1. Verfahren zum Überwachen eines Produktionsprozesses in Echtzeit, mit den Verfahrensschritten:
a) Erfassen eines Datenwerts, durch zumindest eine erste Komponente (1A, 1B, 1C) des Produktionsprozesses;
b) Übermitteln des Datenwerts an eine zweite Komponente (2) des Produktionsprozesses, durch die erste Komponente (1A, 1B, 1C);
c) Zwischenverarbeiten des Datenwertes, durch die zweite Komponente (2);
d) Bereitstellen des zwischenverarbeiteten Datenwertes an eine Maschinen-Lern-Komponente, ML-Komponente (3), für ein Überwachen des Produktionsprozesses durch die ML-Komponente (3), durch die zweite Komponente (2);
**gekennzeichnet durch** ein
- Überprüfen, durch die erste Komponente (1A, 1B, 1C), ob die erste Komponente (1A, 1B, 1C) in dem Produktionsprozess erstmalig in Betrieb genommen wird, und, falls ja, Übermitteln einer für die erste Komponente (1A, 1B, 1C) spezifischen Kontextinformation (I-1A, I-1B, I-1C) und des Datenwerts an die zweite Komponente (2);
- Überprüfen, durch die zweite Komponente (2), anhand der Kontextinformation (I-1A, I-1B, I-1C), ob die erste Komponente (1A, 1B, 1C) des Produktionsprozesses sich von einer vorherigen ersten Komponente des Produktionsprozesses, welche durch die erste Komponente (1A, 1B, 1C) welche die Kontextinformation (I-1A, I-1B, I-1C) übermittelt hat, ersetzt wurde, unterscheidet, und, falls ja, Ausgeben eines Warnsignals und Unterbrechen des Zwischenverarbeitens.

2. Verfahren nach Anspruch 1,
**dadurch gekennzeichnet, dass**
die erste Komponente (1A, 1B, 1C) ein Sensorelement (1B') und/oder ein Aktuatorelement zum Erzeugen des Datenwertes umfasst, insbesondere zusätzlich zu dem Sensor- und/oder Aktuatorelement ein Konvertierelement (1B") zum Konvertieren des von Sensorelement (1B') und/oder Aktuatorelement erzeugten Datenwertes in einen Datenwert einer vorgegebenen physikalischen Einheit.

3. Verfahren nach einem der vorhergehenden Ansprüche,
**dadurch gekennzeichnet, dass**
Datenwerte durch mehrere unterschiedliche erste Komponenten (1A, 1B, 1C) erfasst und an die dann den mehreren unterschiedlichen ersten Komponenten (1A, 1B, 1C) zugeordnete zweite Komponente (2) übermittelt werden.

4. Verfahren nach einem der vorhergehenden Ansprüche,
**dadurch gekennzeichnet, dass**
die für jede Komponente (1A, 1B, 1C, 2, 3) spezifische Kontextinformation (I-1A, I-1B, I-1B', I-1B", I-1C, I-2, I-2', I-2") gemäß einem einheitlichen Informationsmodell aufgebaut ist, welches hierarchisch aufgebaut ist und für alle Komponenten (1A, 1B, 1C, 2, 3) identisch aufgebaute Basisinformationen umfasst.

5. Verfahren nach Anspruch 4,
**dadurch gekennzeichnet, dass**
die Basisinformationen einen Identifikator der Komponenten (1A, 1B, 1C, 2, 3) und/oder einen Namen der Komponenten (1A, 1B, 1C, 2, 3) und/oder eine Beschreibung der Komponenten (1A, 1B, 1C, 2, 3) und/oder eine Parametrisierung für die von den Komponenten (1A, 1B, 1C, 2, 3) bereitgestellten Datenwerte umfassen.

6. Verfahren nach einem der Ansprüche 4 oder 5,
**dadurch gekennzeichnet, dass**
die für die jeweilige erste Komponente (1A, 1B, 1C) spezifische Kontextinformation (I-1A, I-1B, I-1C), bevorzugt zusätzlich zu den Basisinformationen, eine physikalische Einheit des Datenwerts und/oder eine Ortsinformation der ersten Komponente (1A, 1B, 1C) und/oder ein Kodierschema für den Datenwert und/oder ein Datenblatt für die erste Komponente (1A, 1B, 1C) umfassen, und, falls die erste Komponente (1A, 1B, 1C) ein Sensorelement (1B') umfasst, insbesondere einen Namen einer beobachteten Messgröße und/oder eine Beschreibung für die beobachtete Messgröße umfassen, und falls die erste Komponente (1A, 1B, 1C) ein Aktuatorelement umfasst, insbesondere einen Namen eines Aktuatorzwecks und/oder eine Beschreibung für den Aktuatorzweck umfasst.

7. Verfahren nach einem der Ansprüche 4 bis 6,
**dadurch gekennzeichnet, dass**
die für die jeweilige zweite Komponente (2) spezifische Kontextinformation (I-2, I-2', I-2"), bevorzugt zusätzlich zu den Basisinformationen, eine Merkmalsvektor-Spezifikation umfasst, und der oder die Datenwerte der zumindest einen ersten Komponente (1A, 1B, 1C) in Form eines entsprechenden Merkmalsvektors bereitgestellt werden.

8. Verfahren nach einem der Ansprüche 4 bis 7,
**dadurch gekennzeichnet, dass**
die für die jeweilige ML-Komponente (3) spezifische Kontextinformation, bevorzugt zusätzlich zu den Basisinformationen, eine Spezifikation des implementierten ML-Modells und/oder eine Spezifizierung einer Ergebniskodierung des ML-Modells und/oder andere Metadaten wie eine Parametrisierung umfasst.

9. Verfahren nach einem der Ansprüche 3 bis 8,
**dadurch gekennzeichnet, dass**
die zweite Komponente (2) aus von unterschiedlichen ersten Komponenten (1A, 1B, 1C) an sie übermittelte Kontextinformationen (I-1A, I-1B, I-1C) eine zusammengesetzte Kontextinformation (I-2', I-2") generiert, wobei insbesondere die zusammengesetzte Kontextinformation (I-2") die Schnittmenge der übermittelten Kontextinformationen (I-1A, I-1B, I-1C) ist.

10. Verfahren nach einem der vorhergehenden Ansprüche,
**dadurch gekennzeichnet, dass**
- die zweite Komponente (2) überprüft, ob die zweite Komponente (2) in dem Produktionsprozess erstmalig in Betrieb genommen wird, und, falls ja, Bereitstellen der für die zweite Komponente (2) spezifischen Kontextinformation (I-2, I-2', I-2") zusammen mit dem zwischenverarbeiteten Datenwert an die ML-Komponente (3); und dadurch, dass
- die ML-Komponente (3) anhand der Kontextinformation (I-2, I-2', I-2") überprüft, ob die zweite Komponente (2) des Produktionsprozesses sich von einer vorherigen zweiten Komponente des Produktionsprozesses, welche durch die zweite Komponente (2) welche die Kontextinformation (I-2, I-2', I-2") bereitgestellt hat, ersetzt wurde, unterscheidet, und, falls ja, Ausgeben eines Warnsignals und Unterbrechen des Überwachens.

11. Verfahren nach einem der vorhergehenden Ansprüche,
**dadurch gekennzeichnet, dass**
- das Ausgeben des jeweiligen Warnsignals an eine Korrektur-Komponente erfolgt, und auch die Kontextinformation (I-2, I-2', I-2") der Komponente (2, 3), welche das Warnsignal ausgibt, sowie die Kontextinformation (I-1A, I-1B, I-1C, I-2, I-2', I-2") der Komponente (1A, 1B, 1C, 2), welche sich von der vorherigen im Produktionsprozess eingesetzten Komponente unterscheidet, wobei
- die Korrektur-Komponente basierend auf den ausgegebenen Kontextinformationen (I-1A, I-1B, I-1C, I-2, I-2', I-2") eine für das Zwischenverarbeiten und/oder eine für das Überwachen hinterlegte Rechenvorschrift in der das Warnsignal ausgebenden Komponente modifiziert, und
- die das Warnsignal ausgebenden Komponente (2, 3) das Zwischenverarbeiten und/oder das Überwachen nach dem Modifizieren der Rechenvorschrift wiederaufnimmt.

## Claims

1. A method for monitoring a production process in real time, comprising these steps:
a) capturing a data value via at least one first component (1A, 1B, 1C) of the production process;
b) transmitting, via the first component (1A, 1B, 1C), the data value to a second component (2) of the production process;
c) intermediate processing of the data value by the second component (2);
d) providing the intermediate processed data value to a machine learning component, the IVIL component (3), for monitoring the production process by the IVIL component (3), via the second component (2);
**characterised by**
the first component (1A, 1B, 1C) checking whether the first component (1A, 1B, 1C) is being put into operation in the production process for the first time and, if so, transmitting context information specific to the first component (1A, 1B, 1C) and the data value to the second component (2);
the second component (2) checking, on the basis of the context information (I-1A, I-1B, I-1C), whether the first component (1A, 1B, 1C) of the production process differs from a previous first component of the production process which was replaced by the first component (1A, 1B, 1C) which transmitted the context information (I-1A, I-1B, I-1C), and, if so, outputting a warning signal and interrupting the intermediate processing.

2. The method according to claim 1,
**characterised in that**
the first component (1A, 1B, 1C) comprises a sensor element (1B') and/or an actuator element for generating the data value, in particular, in addition to the sensor and/or actuator element, a conversion element (1B") for converting the data value generated by the sensor element (1B') and/or actuator element into a data value of a specified physical unit.

3. The method according to any one of the preceding claims,
**characterised in that**
data values are captured by several different first components (1A, 1B, 1C) and then transmitted to the second component (2), which is then assigned to those several different first components (1A, 1B, 1C).

4. The method according to any one of the preceding claims,
**characterised in that**
the context information (I-1A, I-1B, I-1B', I-1B", I-1C, I-2, I-2', I-2") specific to each component (1A, 1B, 1C, 2, 3) is structured in accordance with a uniform information model, which is organised hierarchically and comprises basic information structured identically for all components (1A, 1B, 1C, 2, 3).

5. The method according to claim 4,
**characterised in that**
the basic information comprises an identifier of the components (1A, 1B, 1C, 2, 3) and/or a name of the components (1A, 1B, 1C, 2, 3) and/or a description of the components (1A, 1B, 1C, 2, 3) and/or a parameterisation for the data values provided by the components (1A, 1B, 1C, 2, 3).

6. The method according to any of claims 4 or 5,
**characterised in that**
the context information (I-1A, I-1B, I-1C) specific to the respective first component (1A, 1B, 1C), preferably in addition to the basic information, comprises a physical unit of the data value and/or location information for the first component (1A, 1B, 1C) and/or a coding scheme for the data value and/or a data sheet for the first component (1A, 1B, 1C), and, if the first component (1A, 1B, 1C) comprises a sensor element (1B'), comprise in particular a name of an observed measured variable and/or a description of the observed measured variable, and, if the first component (1A, 1B, 1C) comprises an actuator element, comprise in particular a name of an actuator purpose and/or a description of the actuator purpose.

7. The method according to any of claims 4 to 6,
**characterised in that**
the context information (1-2, 1-2', 1-2") specific to the respective second component (2) preferably comprises, in addition to the basic information, a feature vector specification, and the data value or values of the at least one first component (1A, 1B, 1C) are provided in the form of a corresponding feature vector.

8. The method according to any of claims 4 to 7,
**characterised in that**
the context information specific to the respective ML component (3), preferably comprises, in addition to the basic information, a specification of the implemented ML model and/or a specification and output encoding of the ML model and/or other metadata such as parameterisation.

9. The method according to any of claims 3 to 8,
**characterised in that**
the second component (2) generates composite context information (I-2', I-2") from context information (I-1A, IB, 1C) transmitted to it from different first components (1A, I-1B, I-1C), wherein, in particular, the composite context information (I-2', I-2") is the intersection of the transmitted context information (I-1A, I-1B, I-1C).

10. The method according to any one of the preceding claims,
**characterised in that**
the second component (2) checks whether the second component (2) is being put into operation in the production process for the first time and, if so, provides the context information specific to the second component (2) (I-2, 1-2', 1-2") together with the processed data value to the ML component (3); and **in that**
the ML component (3) uses the context information (1-2, 1-2', 1-2") to check whether the second component (2) of the production process differs from a previous second component of the production process, which was replaced by the second component (2) that supplied the context information (1-2, 1-2', 1-2") and, if so, outputs a warning signal and interrupts the monitoring.

11. The method according to any one of the preceding claims,
**characterised in that**
the respective warning signal is output to a correction component, and the context information (1-2, 1-2', 1-2") of the component (2, 3) that outputs the warning signal, as well as the context information (I-1A, I-1B, I-1C, 1-2, 1-2', 1-2") of the component (1A, 1B, 1C, 2) which differs from the previous component used in the production process, whereby the correction component modifies a calculation rule stored in the component issuing the warning signal-for intermediate processing and/or for monitoring-based on the output context information (I-1A, I-1B, I-1C, 1-2, 1-2', 1-2"), and
the component (2, 3) that issues the warning signal resumes the intermediate processing and/or monitoring after the calculation rule has been modified.

## Revendications

1. Procédé de surveillance en temps réel d'un processus de production, comprenant les étapes consistant à :
a) collecter une valeur de données grâce à au moins un premier composant (1A, 1B, 1C) du processus de production ;
b) transférer, grâce au premier composant (1A, 1B, 1C), la valeur de données à un second composant (2) du processus de production ;
c) appliquer, grâce au second composant (2), un traitement intermédiaire à la valeur de données ;
d) fournir, grâce au second composant (2), la valeur de données traitée de manière intermédiaire à un composant d'apprentissage automatique, ou composant ML (3), en vue d'une surveillance du processus de production grâce au composant ML (3) ;
**caractérisé par** les étapes consistant à
vérifier, grâce au premier composant (1A, 1B, 1C), si le premier composant (1A, 1B, 1C) est mis en fonctionnement pour la première fois dans le processus de production, et, si tel est le cas, transférer au second composant (2) une information contextuelle (I-1A, I-1B, I-1C) spécifique au premier composant (1A, 1B, 1C) et la valeur de données ;
vérifier, grâce au second composant (2) et à l'aide de l'information contextuelle (I-1A, I-1B, I-1C), si le premier composant (1A, 1B, 1C) du processus de production diffère d'un précédent premier composant du processus de production qui aurait été remplacé par le premier composant (1A, 1B, 1C) ayant transféré l'information contextuelle (I-1A, I-1B, I-1C), et, si tel est le cas, émettre un signal d'avertissement et interrompre le traitement intermédiaire.

2. Procédé selon la revendication 1,
**caractérisé en ce que**
le premier composant (1A, 1B, 1C) comprend un élément capteur (1B') et/ou un élément actionneur permettant de générer la valeur de données, et comprend, en particulier en plus de l'élément capteur et/ou actionneur, un élément convertisseur (1B") permettant de convertir la valeur de données générée par l'élément capteur (1B') et/ou l'élément actionneur en une valeur de données d'une unité physique prédéfinie.

3. Procédé selon l'une quelconque des revendications précédentes,
**caractérisé en ce que**
des valeurs de données sont collectées grâce à plusieurs premiers composants (1A, 1B, 1C) différents et transmises au second composant (2) qui est ensuite associé aux plusieurs premiers composants (1A, 1B, 1C) différents.

4. Procédé selon l'une quelconque des revendications précédentes,
**caractérisé en ce que**
l'information contextuelle (I-1A, I-1B, I-1B', I-1B", I-1C, I-2, I-2', I-2") spécifique à chaque composant (1A, 1B, 1C, 2, 3) est structurées selon un modèle d'information unitaire qui est structuré de manière hiérarchique et qui comprend des informations de base structurées de manière identique pour tous les composants (1A, 1B, 1C, 2, 3).

5. Procédé selon la revendication 4,
**caractérisé en ce que**
les informations de base comprennent un identifiant des composants (1A, 1B, 1C, 2, 3) et/ou un nom des composants (1A, 1B, 1C, 2, 3) et/ou une description des composants (1A, 1B, 1C, 2, 3) et/ou une paramétrisation des valeurs de données fournies par les composants (1A, 1B, 1C, 2, 3).

6. Procédé selon l'une quelconque des revendications 4 ou 5,
**caractérisé en ce que**
'information contextuelle (I-1A, I-1B, I-1C) spécifique au premier composant (1A, 1B, 1C) respectif comprent, de manière préférée en plus des informations de base, une unité physique de la valeur de données et/ou uneinformation de localisation du premier composant (1A, 1B, 1C) et/ou un schéma de codage pour la valeur de données et/ou une fiche de données pour le premier composant (1A, 1B, 1C), et, si le premier composant (1A, 1B, 1C) comprend un élément capteur (1B'), comprennent en particulier un nom d'une grandeur de mesure observée et/ou une description de la grandeur de mesure observée, et, si le premier composant (1A, 1B, 1C) comprend un élément actionneur, comprennent en particulier un nom d'une fonction de l'actionneur et/ou une description de la fonction de l'actionneur.

7. Procédé selon l'une quelconque des revendications 4 ou 6,
**caractérisé en ce que**
l'information contextuelle (1-2, 1-2', 1-2") spécifique au second composant respectif (2) comprent, de manière préférée en plus des informations de base, une spécification de vecteur de caractéristiques, et la ou les valeur(s) de données du au moins un premier composant (1A, 1B, 1C) est/sont fournie(s) sous la forme d'un vecteur de caractéristiques correspondant.

8. Procédé selon l'une quelconque des revendications 4 ou 7,
**caractérisé en ce que**
l'information contextuelle spécifique au composant ML (3) respectif comprent, de manière préférée en plus des informations de base, une spécification du modèle ML implémenté et/ou une spécification d'un codage de résultat du modèle ML et/ou d'autres métadonnées telles qu'une paramétrisation.

9. Procédé selon l'une quelconque des revendications 3 ou 8,
**caractérisé en ce que**
le second composant (2) génère une information contextuelle composite (1-2', I-2") à partir d'informations contextuelles (I-1A, I-1B, I-1C) qui lui sont transmises par différents premiers composants (1A, IB, IC), dans lequel en particulier l'information contextuelle composite (1-2") représente une convergence des informations contextuelles (I-1A, I-1B, I-1C) transmises.

10. Procédé selon l'une quelconque des revendications précédentes,
**caractérisé en ce que**
le second composant (2) vérifie si le second composant (2) est mis en fonctionnement pour la première fois dans le processus de production et, si tel est le cas, fournit au composant ML (3) l'information contextuelle (I-2, I-2', I-2") spécifique au second composant (2) ainsi que la valeur de données traitées de manière intermédiaire ; et **en ce que**
le composant ML (3) vérifie, à l'aide de l'information contextuelle (1-2, 1-2', 1-2"), si le second composant (2) du processus de production diffère d'un précédent second composant du processus de production qui aurait été remplacé par le second composant (2) ayant fourni l'information contextuelle (1-2, 1-2', 1-2"), et, si tel est le cas, émet un signal d'avertissement et interrompt la surveillance.

11. Procédé selon l'une quelconque des revendications précédentes,
**caractérisé en ce que**
l'émission du signal d'avertissement respectif intervient au niveau d'un composant de correction, et également l'information contextuelle (1-2, 1-2', 1-2") du composant (2, 3) qui émet le signal d'avertissement, de même que l'information contextuelle (I-1A, I-1B, I-1C, 1-2, 1-2', 1-2") du composant (1A, 1B, 1C, 2) qui diffère du composant précédent utilisé dans le processus de production, dans lequel le composant de correction modifie, au sein du composant émettant le signal d'avertissement et en se basant sur les informations contextuelles (I-1A, I-1B, I-1C, 1-2, 1-2', 1-2") émises, une règle de calcul stockée en vue du traitement intermédiaire et/ou en vue de la surveillance, et
le composant (2, 3) émettant le signal d'avertissement reprend le traitement intermédiaire et/ou la surveillance après modification de la règle de calcul.
